# EUROPEAN PATENT APPLICATION

(11) **EP 4 748 467 A1**
(43) Date of publication of application: **27.05.2026**
(21) Application number: 24383256.5
(22) Date of filing: 20.11.2024
(51) Int. Cl.: B01D 29/33, B01D 29/66, B01D 35/153, B01D 35/22, B01D 35/20

(54) **REGENERATIVE FILTRATION EQUIPMENT FOR LIQUIDS**

(71) Applicant: Hidrotuit, S.L.U., 43206 Reus (Tarragona) (ES)
(72) Inventor: AMELLA ALBES, MARC, 43430 VIMBODI I POBLET (ES)
(74) Representative: Espiell Gomez, Ignacio

(57) **Abstract**

Liquid regenerative filtration equipment with a pressurized tank (2) with lower inlet (3), upper outlet (4), candles (7) hanging from a plate (8) separating the upper part (2.1) from the lower part (2.2), where a filter medium (6) forms a precoat (6.1) on the candles (7), and a vibrator (9) and a propeller (10) for agitating the filter medium (6) and regenerating the precoat (6. 1), where each candle (7) incorporates a one-way check valve (12), which prevents the filtered liquid from flowing in the opposite direction. There is a free space (7.2) between the valve (12) and the plate (8) so that it can flow backwards towards the lower part (2. 2) of the tank (2) and clean the candles (7) by regenerating the precoat (6.1). The lower inlet (3) of the liquid to be filtered incorporates a diffuser (13) that distributes the flow to the inner base of the tank (2).

## Description

### OBJECT OF THE INVENTION

The invention, as expressed in the wording of this descriptive report, refers to equipment for the regenerative filtration of liquids which provides advantages and characteristics to the function for which it is intended. These are described below.

The object of this invention is a series of improvements to filtration equipment that consists of a tank with the inlet and outlet of the liquid to be filtered, such as water, which is provided internally via candles with sleeves supporting a filtering medium such as perlite and one or more systems for the regeneration of said filtering medium. These improvements affect both the efficiency of the equipment for obtaining a filtered liquid and the regenerative capacity of the filtering medium. Thanks to this, it is applicable even for alimentary liquids so that it can be used for filtering swimming pool water and also sanitary water, alimentary liquids, and all types of industrial or similar liquids.

### FIELD OF APPLICATION OF THE INVENTION

The field of application of this invention is part of the industry sector dedicated to the manufacture of liquid filtration systems, focusing particularly on those that include candles supporting a filter medium such as perlite or similar.

### BACKGROUND OF THE INVENTION

Regenerative filters of the type described here are known in the state of the art, i.e., based on candles that act as a support for a filter medium incorporated inside a casing through which the liquid to be filtered is circulated.

In fact, document P201930612, which is owned by the applicant itself, indicates a perlite filter that basically comprises a housing with a lower liquid inlet, an upper liquid outlet and a series of candles arranged between the two. There is also a lower space with expanded perlite particles that acts as a filter medium by adhering to the candle sleeves, with the passage of the liquid forming a filter cake or precoat. There is also a vibrator that shakes a plate from which the candles hang in order to periodically regenerate the filter medium so that, after stopping the passage of the liquid, the candles recover their original form when shaken and when the perlite falls and returns to the lower space. On restarting the circulation of the fluid, the perlite re-forms the cake or precoat, with another arrangement of the particles and therefore resumes the capture of matter until the next regeneration or until its final saturation.

Likewise, document P202230946, which is also owned by the applicant of this invention, indicates a filter cleaning device for liquids with candles and a regeneration system like that of the above-mentioned document, which in this case, is essentially based on the inclusion of a propeller inside the filter housing. The drive of this propeller, which is a motor or actuator located externally, causes a turbulent flow in spiral rotation with a closed trajectory that defines a vortex capable of dragging the filter medium. Thus, with the filter stopped and filled with the liquid to be regenerated together with the filter medium adhered to the filter bag, the activation of the propeller allows the filter cake or precoat to be removed from the bag.

The object of this invention is to provide the market with a new and improved type of liquid filter based on candles supporting a filter medium such as perlite or the like. In addition to disclosing the described regenerative systems of the filter medium in the cited documents, it has improvements on the one hand to avoid any contamination of the clean liquid once filtered, especially during the regeneration processes of the filtering medium, and on the other hand to improve the regeneration of the filtering medium by activating a counter-flow that performs a deeper washing of the candles before the reactivation of the flow, therefore compensating the perlite precoat or filtering medium repositioned on the sleeve of said candles.

Moreover, and as a reference to the current state of technology, it should be noted that, at least on the part of the applicant, it is unknown the existence of any other equipment for regenerative filtration of liquids or any other invention of similar application with technical characteristics, structural and constitutive equal or similar to those for which it is claimed here.

### EXPLANATION OF THE INVENTION

The equipment for regenerative filtration of liquids proposed by this invention is configured as an optimal solution to achieve the objectives mentioned above, which, in turn, represents an improvement of the current state of the technique, being the characterizing details that make it possible and that distinguish it, conveniently included in the final claims that accompany this description.

Specifically, the filtration equipment proposed by the invention is one of those comprising a pressurized tank with a lower inlet for the liquid to be filtered, a filtered liquid outlet in the upper part and a lower drain for complete emptying, which is internally provided by a plurality of candles with filtering sleeves that serve as a support for a filtering medium such as perlite or another that adheres to them to form a precoat. As mentioned above, the equipment constitutes a filter system for liquids of food quality, so it can be used for sanitary water, food liquids, industrial water or similar.

The tank is divided into two parts: the lower part and the upper part.

The lower part of the tank is the filtering area, where the inlet of the liquid to be filtered is coupled and, inside is the filtering medium and the candles, which hang from a plate with collectors and act as a support for the filtering medium.

The candles preferably consist of a spring, made of stainless steel for example, covered with a filter bag made of polypropylene or other chemically and physically resistant material.

The upper part is the clean liquid zone where the filtered liquid outlet is located.

The area dividing the upper and lower parts is formed by a plate of collectors from which hang the candles, which act as a support for the filter medium and which reside in the lower part.

The filter medium used is usually perlite, but also diatomaceous earth and the like. The filter medium adheres to the filtering sleeves of the candles to form a cake or precoat, which acts as a sieve and retains the matter and sediments contained in the liquid to be filtered when it is circulated inside the tank. This precoat is regenerated when partially clogged, decomposing the precoat and recomposing it again, so that when it is repositioned it leaves free space to retain more matter. This process is repeated periodically every 'X' hours until the precoat is almost at its limit due to saturation, which is reflected in the inlet and outlet pressure gauges of the equipment by a pressure differential.

Therefore, the most important aspect of the equipment is its capacity to regenerate the filter medium, which is understood as detaching, decomposing and recomposing the precoat of the filter medium that forms on the candles.

For this purpose, the equipment optionally includes different regeneration systems.

The first is based on a vibrator that shakes the candles. With this system, the first step is to stop the flow of liquid to be filtered. When the flow stops, the precoat of the filter medium should detach from the candle and decompose. A vibrator is used to shake the candles. This vibrator is preferably attached to the plate from which all the candles hang.

The second is based on a propeller that agitates the fluid and causes a turbulent flow that cleans the candles. By means of this propeller, a cyclonic effect is generated inside the tank that causes the candles to be cleaned by the filter medium itself.

The third is the reactivation of the liquid flow in order to recompose the precoat by relocating the dirty part of the filter medium to one side of the candle and therefore leaving part of the precoat free to retain more matter. This process effectively solves the regeneration.

However, during the regeneration process there are movements of the liquid, medium and matter inside the filter, which could lead to contamination of the medium and towards the top of the tank where the clean liquid resides, with the danger that this contamination could end up in the system which can only contain filtered liquid.

To avoid this problem and as an essential distinguishing feature of the filtering equipment of this invention, it incorporates a valve, such as a one-way check valve or non-return valve, which is assembled on each of the filter bags of the candles.

This valve provides sufficient retention so that the movement that occurs during regeneration of the filter medium in the lower part of the tank cannot contaminate the upper part of the tank with clean liquid.

This check valve of each candle opens when the liquid flow is activated, therefore initiating the filtration.

Moreover, in a preferred embodiment of the invention, the aforementioned valve installed in each of the candles is incorporated, leaving a free space between the candle and the collector plate from which the candles hang.

This makes it possible to apply an additional system for the regeneration of the filter medium by applying counter-flow. This washes the candles, causing the liquid to exit through the free space of the candle, between it and the plate from which it hangs, cleaning the base of the collector plate with the pressure of the liquid itself and draining through the entire candle. As a result, this helps to achieve a more complete and thorough cleaning of the candle.

Furthermore, in a preferred embodiment of the equipment of the invention, the inlet of the liquid to be filtered in the lower part of the tank incorporates a diffuser to distribute the liquid directed to the base of the tank, so that the filtering medium that remains at the bottom is directed to the area of the candles.

### DESCRIPTION OF THE DRAWINGS

To complement the description that is being made and in order to help a better understanding of the characteristics of the invention, the present descriptive report is accompanied, as an integral part of it, by some designs in which, in an illustrative and non-limitative manner, the following has been represented:

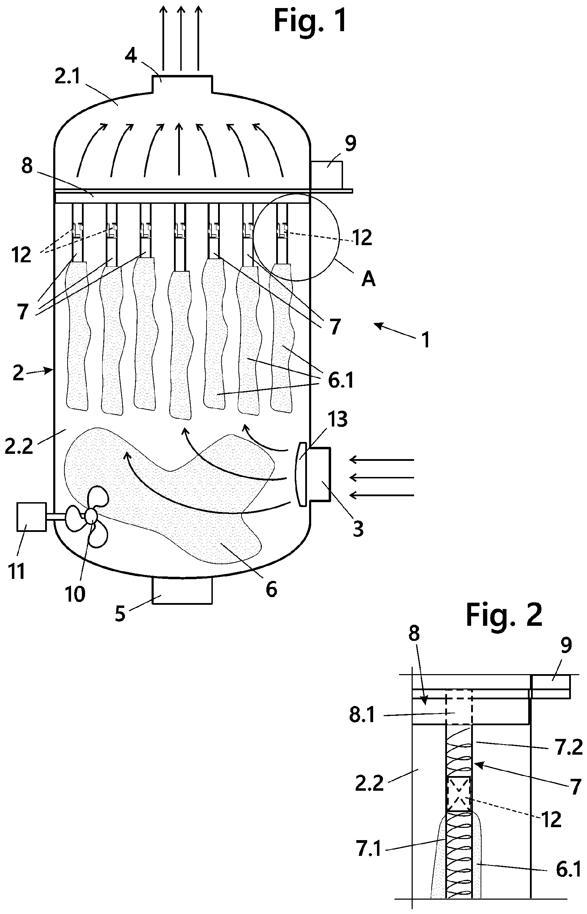

Figure 1. Shows a schematic section view of an example of the regenerative liquid filtration equipment covered by the invention, where the main parts and elements that it comprises can be seen; the flow of liquid in the filtering operation phase is represented by means of arrow lines;
Figure 2. Shows an enlarged view of detail A in Figure 1, showing the arrangement of one of the unidirectional check valves in the candle sleeve, leaving space between it and the collector plate from which it hangs; and
Figure 3. Again shows a sectional view of the equipment, similar to that shown in Figure 1, in this case represented in the phase of regeneration of the filter medium by means of the application of counter-flow.

### PREFERENTIAL IMPLEMENTATION OF THE INVENTION

In light of the aforementioned figures, and in accordance with the numbering adopted, an example can be seen of the non-limiting implementation of the regenerative filtration equipment for liquids pertaining to the invention, encompassing what is described in detail below.

Therefore, as shown in these figures, the filtering equipment (1) of the invention comprises, essentially:
- a pressurized tank (2) with a lower inlet (3) for the liquid to be filtered, an upper outlet (4) for the filtered liquid and a lower drain (5) for emptying the tank (2),
- a filter medium (6), such as expanded perlite or the like, incorporated within the tank (2) so that it is entrained in the liquid flow,
- a plurality of candles (7) covered with the sleeves (7.1) of filtering material which serve as a support to which the filter medium (6) adheres when entrained by the liquid flow inside the tank (2), forming a precoat (6.1) on these,
- a plate (8) with collectors (8.1) from which hang the candles (7) connected to them and which separates the inside of the tank (2) between an upper part (2.1) with the upper outlet (4) where the filtered liquid arrives, and a lower part (2.2) with the lower inlet (3) where the liquid to be filtered arrives and where the filter medium (6) is located,

And, on the basis of said configuration, the filtering equipment (1) that is the object of the invention is essentially distinguished by comprising a valve (12) in each of the candles (7), conveniently coupled inside each of the filtering sleeves (7.1) of said candles (7) through the interior of which the liquid passes after filtering in the precoat (6.1) of the filtering medium (6) adhered to them, allowing the flow of liquid from the lower liquid inlet (3) to be filtered in the lower part (2.2) of the tank (2) to the upper outlet (4) of filtered liquid in the upper part (2.1) of the tank (2) when the filtration process is activated, but prevents the liquid to be filtered from flowing into the upper part (2.1) of the tank (2) when the filtration process is deactivated. This could happen, for example, when a regeneration procedure of the precoat (6.1) of the filter medium (6) in the lower part (2.2) of the tank (2) is performed, therefore preventing the contamination of the upper part (2.1) of the tank (2) with unfiltered liquid. Such contamination of the filtered liquid could occur if the liquid to be filtered were to enter the upper part (2.1) of the tank (2) by the vibrating and shaking motion of the regeneration.

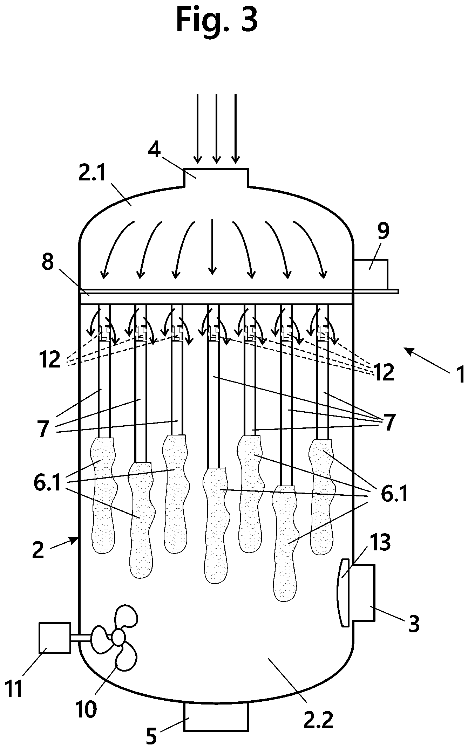

Furthermore, in a preferred embodiment of the invention, the aforementioned one-way check valve (12) installed in each of the candles (7) inside the tank (2) is incorporated in the upper area of the sleeve (7.1) of said candles (7), there being a free space (7.2) between the valve (12) and the collector (8.1) corresponding to the plate (8) to which the candles (7) are connected and fixed, such that if a backflow of liquid is applied, it can flow out through said free space (7.2) toward the lower part (2.2) of the tank (2) and achieve an additional regeneration of the precoat (6.1) of the filter medium (6), carrying out a washing of the candles (7), as schematically represented in Figure 3.

It should be noted that, in a preferred embodiment of the equipment (1), the lower inlet (3) of the liquid to be filtered located in the lower part (2.2) of the tank (2) incorporates a diffuser (13) arranged and configured so as to cause the distribution of the flow of liquid directed to the inner base of the tank (2), so that the filter medium (6) that remains resting on the bottom is directed to the area of the candles (7).

The filtering equipment (1) of the invention may comprise one or more of the following elements:
- a vibrating mechanism (9) which, associated with the separator plate (8) from which the candles (7) hang, shakes them periodically to loosen the precoat (6.1) and regenerate it, and
- a propeller (10) which, located internally in the lower part (2.2) of the tank (2) and connected to an external actuator such as a motor (11), makes it possible to agitate the liquid with the filter medium (6) to cause turbulence, which also cleans the candles (7) from the precoat (6.1) to regenerate it with the filter medium (6) itself.

Having sufficiently described the characteristics of the present invention, as well as the method of putting it into practice, it is not considered necessary to set forth a more extensive explanation so that any expert in the field understands its scope and the advantages derived from it.

## Claims

1. Liquid regenerative filtration equipment which, comprising:
- a pressurized tank (2) with lower inlet (3) for the liquid to be filtered, upper outlet (4) for the filtered liquid, lower drain (5) for emptying,
- a filter medium (6), such as expanded perlite or similar,
- a plurality of candles (7) with sleeves (7.1) where the filter medium (6) adheres to form a precoat (6.1) for filtering,
- a plate (8) with collectors (8.1) from which the candles (7) hang and which separates the tank (2) between an upper part (2.1) of filtered liquid and a lower part (2.2) of liquid to be filtered with the filter medium (6),
**characterized by** comprising, in each of the candles (7), coupled inside each of the filter bags (7.1) of said candles (7) through the interior of which the liquid passes after filtering in the precoat (6.1) of the filter medium (6) adhered to them, a valve (12) that allows the flow of liquid from the lower inlet (3) of liquid to be filtered in the lower part (2.2) of the tank (2) to the upper outlet (4) of filtered liquid in the upper part (2. 1) of the tank (2) when the filtration process is activated but prevents the liquid to be filtered from flowing into the upper part (2.1) of the tank (2) when the filtration process is deactivated, e.g. when a regeneration procedure of the precoat (6.1) of the filter medium (6) in the lower part (2.2) of the tank (2) is carried out thus preventing contamination of the upper part (2.1) of the tank (2) with unfiltered liquid.
when the filtering process is activated and a forced flow is generated between but prevents the lower part (2.2) and the upper part (2.1) of the filtered liquid and the lower part (2.2) of the liquid to be filtered with the filter medium (6), said liquid to be filtered accesses when an upper part (2.1) of the filtered liquid when .

2. Liquid regenerative filtration equipment, according to Claim 1, **characterized in that** the one-way check valve (12) installed in each of the candles (7) inside the tank (2) is incorporated in the upper part of the sleeve (7.1) of the said candles (7), there being a free space (7. 2) between the valve (12) and the corresponding collector (8.1) of the plate (8) to which the candles (7) are connected and fixed, such that if a backflow of liquid is applied, it can exit through said free space (7.2) toward the lower part (2.2) of the tank (2) and clean the candles (7) by regenerating the precoat (6.1).

3. - Liquid regenerative filtration equipment, according to claim 1 or 2, **characterized in that** the lower inlet (3) of the liquid to be filtered located in the lower part (2.2) of the tank (2) incorporates a diffuser (13) arranged and configured in such a way as to cause the distribution of the liquid flow directed to the inner base of the tank (2).

4. Liquid regenerative filtration equipment, according to any of the previous claims, **characterized in that** it includes a vibrating mechanism (9) of the plate (8) to shake the candles (7) and regenerate the precoat (6.1), and

5. Liquid regenerative filtration equipment, according to any of the previous claims, **characterized in that** it includes a propeller (10) in the lower part (2.2) to shake theliquid with the filter medium (6), which also cleans the candles (7) to regenerate the precoat (6.1).

## Amended claims

### Amended claims in accordance with Rule 137(2) EPC.

1. Liquid regenerative filtration equipment comprising:
- a pressurized tank (2) with a lower inlet (3) for the introduction of a liquid to be filtered, an upper outlet (4) for the extraction of the filtered liquid, and a lower drain (5) for emptying,
- a filter medium (6)
- a plurality of candles (7) with filter sleeves (7.1) to which the filter medium (6) adheres to form a precoat (6.1) for filtering,
- a plate (8) with collectors (8.1) from which the candles (7) hang and which separates the tank (2) between an upper part (2.1) of filtered liquid and a lower part (2.2) of liquid to be filtered with the filter medium (6),
**characterized by** comprising, in each of the candles (7), coupled inside each of the filter sleeves (7.1) of said candles (7) through the interior of which the liquid passes after filtering in the precoat (6.1) of the filter medium (6) adhered to them, a one-way check valve (12) configured to allow the flow of liquid from the lower inlet (3) of liquid to be filtered in the lower part (2.2) of the tank (2) towards the upper outlet (4) of filtered liquid in the upper part (2. 1) of the tank (2) when the filtration process is activated, but to prevent the liquid to be filtered from flowing into the upper part (2.1) of the tank (2) when the filtration process is deactivated, e.g. when a regeneration procedure of the precoat (6.1) of the filter medium (6) in the lower part (2.2) of the tank (2) is carried out, thus preventing contamination of the upper part (2.1) of the tank (2) with unfiltered liquid

2. Liquid regenerative filtration equipment according to claim 1, wherein the one-way check valve (12) installed in each of the candles (7) inside the tank (2) is incorporated in an upper part of the filter sleeve (7.1) of the said candles (7), there being a filter sleeve portion (7. 2) between the valve (12) and the corresponding collector (8.1) of the plate (8) to which the candles (7) are connected and fixed, such that if a backflow of liquid is applied, it can exit through said filter sleeve portion (7.2) toward the lower part (2.2) of the tank (2) and clean the candles (7) by regenerating the precoat (6.1).

3. Liquid regenerative filtration equipment according to any of claims 1 or 2, wherein the lower inlet (3) of the liquid to be filtered located in the lower part (2.2) of the tank (2) incorporates a diffuser (13) configured to cause the distribution of the liquid flow directed to the inner base of the tank (2).

4. Liquid regenerative filtration equipment according to any of the previous claims, including a vibrating mechanism (9) of the plate (8) to shake the candles (7) and regenerate the precoat (6.1), and

5. Liquid regenerative filtration equipment according to any of the previous claims, including a propeller (10) in the lower part (2.2) to shake the liquid with the filter medium (6), which also cleans the candles (7) to regenerate the precoat (6.1).

6. Method for operating the liquid regenerative filtration equipment of any of the previous claims, **characterized by** comprising the following steps:
- when the filtration process is activated, opening the one-way check valves (12) for allowing the flow of liquid from the lower inlet (3) of liquid to be filtered in the lower part (2.2) of the tank (2) to the upper outlet (4) of filtered liquid in the upper part (2. 1) of the tank (2), and
- when the filtration process is deactivated, closing the one-way check valves (12) for preventing the liquid to be filtered from flowing into the upper part (2.1) of the tank (2).

7. Method according to claim 6 when dependent on claim 2, further comprising the step of applying a backflow of liquid through the candles (7) which exits through said filter sleeve portion (7.2) toward the lower part (2.2) of the tank (2) and cleans the candles (7) by regenerating the precoat (6.1).
